# EUROPÄISCHE PATENTSCHRIFT

(11) **EP 2 342 886 B1**
(45) Veröffentlichungstag und Bekanntmachung des Hinweises auf die Patenterteilung: **04.03.2015**
(21) Anmeldenummer: 08874955.1
(22) Anmeldetag: 23.09.2008
(51) Int. Cl.: H04W 4/02, H04W 4/18, H04W 4/20, H04L 29/08, H04L 29/06

(54) **VERFAHREN UND ENDGERÄT ZUM ÜBERMITTELN VON AUFENTHALTSINFORMATION IN INTERNETORIENTIERTEN NETZWERKEN**
METHOD AND TERMINAL DEVICE FOR TRANSMITTING LOCATION INFORMATION IN INTERNET-ORIENTED NETWORKS
PROCÉDÉ ET TERMINAL POUR TRANSMETTRE DES INFORMATIONS DE LOCALISATION DANS DES RÉSEAUX ORIENTÉS INTERNET

(43) Veröffentlichungstag der Anmeldung: 13.07.2011
(73) Patentinhaber: Unify GmbH & Co. KG, 81379 München (DE)
(72) Erfinder: BOZIONEK, Bruno, 33178 Borchen (DE); KLAGHOFER, Karl, 81373 München (DE); PRANGE, Holger, 81373 München (DE); TIETSCH, Michael, 86916 Kaufering (DE)
(74) Vertreter: Fritzsche, Thomas
(86) Internationale Anmeldenummer: PCT/EP2008/008053
(87) Internationale Veröffentlichungsnummer: WO 2010/034322

(56) Entgegenhaltungen:
- EP-A- 1 906 638
- SCHULZRINNE COLUMBIA U H: "Emergency Services for Internet Telephony based on the Session Initiation Protocol (SIP); draft-schulzrinne-sipping-sos-03.txt" IETF STANDARD-WORKING-DRAFT, INTERNET ENGINEERING TASK FORCE, IETF, CH, Nr. 3, 6. Dezember 2002 (2002-12-06), XP015035066 ISSN: 0000-0004
- HENNING SCHULZRINNE ET AL: "Providing Emergency Services in Internet Telephony" IEEE INTERNET COMPUTING, IEEE SERVICE CENTER, NEW YORK, NY, US, 1. Juni 2002 (2002-06-01), Seiten 39-47, XP002308545 ISSN: 1089-7801

## Beschreibung

In Telefonnetzen wird als Identifikation eines eine Kommunikationsbeziehung einleitenden Endgerätes dessen Rufnummer - in der Fachwelt als Calling Party Number bezeichnet - an das Netzwerk übermittelt. Anders als in herkömmlichen Telefonnetzen kann z.B. in einem auf dem Internetprotokoll basierenden Netzwerk aus der Calling Party Number nicht mehr der Aufenthaltsort oder der Aufenthaltsbereich des Endgeräts - insbesondere eines mobilen Endgeräts - ermittelt werden.

Insbesondere in mobilen Kommunikations- Endgeräten sind Verfahren und Komponenten realisiert, mit denen der Aufenthaltsort oder Aufenthaltsbereich ermittelt werden kann. So ist beispielsweise in einer Vielzahl von mobilen Endgräten eine GPS- Funktion (Global Position System) realisiert, mit dessen Hilfe unabhängig von Netzwerk die Position des mobilen Endgeräts ermittelt werden kann. Die den Aufenthalt eines Endgeräts anzeigende Information wird in der Fachwelt Location-Information genannt.

Aus den Druckschriften
- HENNING SCHULZRINNE et al: "Providing Emergency Services in Internet Telephony", IEEE INTERNET COMPUTING, IEEE SERVICE CENTER, NEW YORK, NY, US, 1. Juni 2002 (2002-06-01), Seiten 39-47, XP002308545, ISSN: 1089-7801;
- EP 1 906 638 A1 und
- SCHULZRINNE, H., COLUMBIA U.: "Emergency Services for Internet Telephony based on the Session Initial Protocol (SIP); draft-schulzrinne-sipping-sos-o3.txt", IETF STANDARD-WORKING-DRAFT, INTERNET ENGINEERING TASK FORCE, IETF, CH, Nr. 3, 6. Dezember 2002 (2002-12-06), XP015035066, ISSN: 0000-0004;
ist ein Verfahren zum Informieren eines auf dem Internetprotokoll basierenden Netzwerks über den geographischen Aufenthalt eines Endgerätes bekannt, bei dem eine im Endgerät verfügbare, den geographischen Aufenthalt des Endgeräts anzeigenden Location- Information in Meldungen eines SIP- Protokolls eingebettet wird, die während des Aufbaus einer Session oder während einer Session zwischen dem Endgerät und dem Netzwerk ausgetauscht werden oder die während der Registrierung eines Endgeräts im Netzwerk oder bei einer Anforderung eines Dienstes oder Funktion ausgetauscht werden.

Die der Erfindung zugrunde liegende Aufgabe besteht darin, ein z.B. auf dem Internetprotokoll basierendes Netzwerk über den geographischen Aufenthalt seiner Kommunikations- Endgeräte zu informieren. Die Aufgabe wird durch das Verfahren des Anspruchs 1 und das dazu entsprechend ausgetaltete mobile Endgerät gemäß Anspruch 6 gelöst.

Der wesentliche Aspekt des erfindungsgemäßen Verfahrens ist darin zu sehen, dass eine im Endgerät verfügbare, den geographischen Aufenthalt des Endgeräts anzeigende Location-Information in Meldungen eines SIP- Protokolls (Session Initial Protocol) eingebettet wird,
- die während des Aufbaus einer Session oder
- während einer Session zwischen dem Endgerät und dem Netzwerk oder
- die während der Registrierung eines Endgeräts im Netzwerk (oder
- bei einer Anforderung eines Dienstes oder Funktion ausgetauscht werden.

Ein wesentlicher Vorteil der Erfindung ist darin zu sehen, dass durch eine Ergänzung des SIP- Protokolls die Location-Information von einem mobilen oder drahtgebundenen Endgerät an das Netzwerk in der Initialisierungsphase einer Session und auch während einer Session übertragen werden kann. Hierdurch kann der wirtschaftliche Aufwand für die Implementierung der Übermittlung der Location- Information an das Netzwerk minimiert werden, da z.B. kein weiteres Protokoll für die Übermittlung der Location- Information implementiert werden muss.

Erfindungsgemäß kann die Location- Information auch außerhalb einer Session, d.h. über das Endgerät wird aktuell kein Gespräch geführt oder keine Informationsübertragung durchgeführt, vom Endgerät an das Netzwerk übertragen werden. Hierdurch ist dem Netzwerk auch in Situationen, in denen keine Session vom Endgerät besteht, die Location- Information bekannt und kann für unterschiedliche Applikationen verwendet werden.

Weitere vorteilhafte Ausgestaltungen der Erfindung, insbesondere ein mobiles Endgerät sind den weiteren Ansprüchen zu entnehmen.

Im Folgenden werden die Erfindung und deren vorteilhafte Weiterbildungen anhand einer zeichnerischen Darstellung näher erläutert.

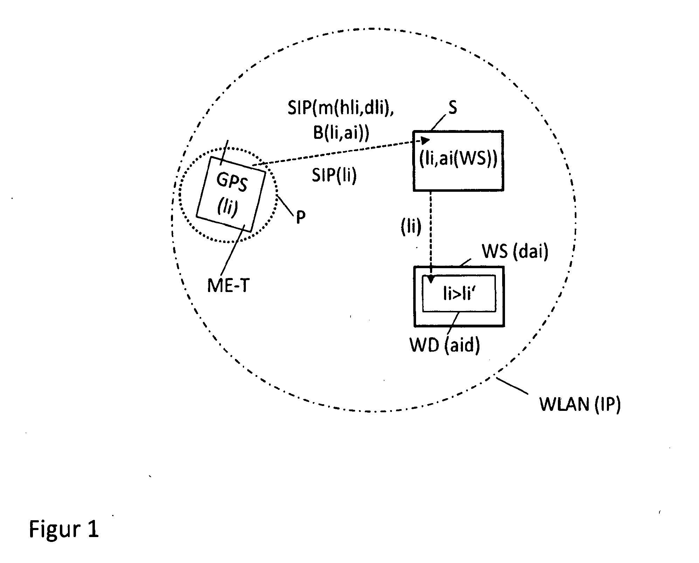

Die einzige Figur 1 zeigt in einer schematischen Darstellung beispielhaft eines von mehreren möglichen mobilen Endgeräten ME mit beispielsweise einer Telefonfunktion T -im weiteren mit mobiles Endgerät ME-T bezeichnet -, das z.B. in einem drahtlosen Netzwerk - beispielsweise ein drahtloses lokales Netzwerk WLAN - subskribiert ist. Das erfindungsgemäße Verfahren ist vorteilhaft auch in anderen drahtgebundenen Netzwerken wie beispielsweise lokalen Netzwerken oder in weiteren drahtlosen Netzwerken wie beispielsweise UMTS einsetzbar - nicht dargestellt.

Das mobile Endgerät ME-T ist mit einer Funktion ausgestattet, mit der es seine geographische Position P bzw. seinen geographischen Aufenthaltsbereich P ermitteln bzw. feststellen kann. Die geographische Position P des Endgeräts ME-T kann beispielsweise durch eine im Endgerät ME-T realisierte GPS-Funktion GPS - GPS- Empfänger sowie geeignete Programme - bestimmt werden - in der Figur durch die Bezeichnung GPS angedeutet. Alternativ kann der geographische Aufenthaltsbereich P durch eine Funktion im Endgerät ME-T ermittelt werden, bei dem aus den Pegeln und der Empfangsrichtung der Funksignale von mehreren Funkbereichen der Funkstationen der Aufenthaltsbereich P berechnet wird - nicht dargestellt. Die den geographischen Aufenthaltsbereich P oder die geographische Position P anzeigende Information wird in der Fachwelt mit Location- Information li bezeichnet. Die Location- Information li kann beispielsweise durch Koordinaten des kartesischen Koordinatensystem, auch Geolocation genannt, oder durch sogenannte Civic Address Information, wie postalische Information bzw. Adressen - Ort, Strasse, Hausnummer, Postleitzahl - oder andere geophysikalische Information angegeben werden.

Für das Ausführungsbeispiel sei angenommen, dass das drahtlose Netzwerk WLAN gemäß dem Internetprotokoll IP betrieben wird, wobei das mobile Endgerät ME-T als IP- Endgerät ausgestaltet ist - in der Figur durch die Bezeichnung WLAN (IP) angedeutet. Für die Signalisierung der Telefon- bzw. Sprachverbindungen des mobilen Endgeräts ME-T zu anderen mobilen Endgeräten - nicht dargestellt - ist vorteilhaft ein SIP- Protokoll SIP vorgesehen - in der Figur durch die Bezeichnung SIP angedeutet. Ein SIP- Protokoll SIP ist aktuell im RFC- Standard 3261 spezifiziert und ist insbesondere für die Internet-Telefonie bzw. für Endgeräte mit der Übertragung von Sprachinformation bzw. Multimediainformation vorgesehen.

Erfindungsgemäß wird die Location- Information li mit Hilfe des SIP- Protokolls SIP von dem mobilen Endgerät ME-T an das drahtlose Netzwerk WLAN übertragen. Für das Ausführungsbeispiel sei angenommen, dass die Location- Information li an einen Server S im drahtlosen Netzwerk WLAN drahtlos übertragen und dort gespeichert wird - in der Figur durch einen mit SIP (li) bzw. SIP (m(hli, dli), B(li, ai)) bezeichneten Pfeil angedeutet. Das SIP- Protokoll SIP kann mehrere Sessions mit einem oder mehreren mobilen Endgeräten ME-T verwalten, wobei nicht nur Sessions für Sprache bzw. Telefonie sondern beliebige Sessions mit Übertragung von Multimediaströmen für beispielsweise Konferenzen oder andere Endgeräte wie beispielsweise Personalcomputer möglich sind.

Im SIP- Protokoll SIP sind mehrere Meldungen m spezifiziert, die während der Initialisierung einer Session zwischen zwei mobilen Endgeräten ME-T oder während einer Session vom mobilen Endgerät ME-T an das drahtlose Netzwerk WLAN oder umgekehrt übertragen werden.

Gemäß dem aktuellen SIP- Standard sind für die Initialisierung einer Session die INVITE- Meldung und während einer Session die NOTIFY-, die UPDATE- und die PUBLISH- Meldung vorgesehen. Für die Einleitung einer Subskribierung eines mobilen Endgeräts ME-T in einem Netzwerk ist eine SUBSCRIBE-Meldung und für die Einleitung einer Registrierung eines mobilen Endgeräts ME-T im Netzwerk ist eine REGISTER- Meldung vorgesehen. Erfindungsgemäß kann in all diesen Meldungen m die Location- Information li übertragen werden.

Eine SIP- Meldung m ist generell durch einen Header H und einen Nutzteil gebildet, wobei der Nutzteil im SIP- Standard SIP als Body B bezeichnet ist und im Weiteren so bezeichnet wird. Für das Ausführungsbeispiel sei angenomnen, dass der Header H durch einen Hinweis hli ergänzt ist, dass die Übertragung einer Location- Information li unterstützt wird und eine Location- Information li im Body B enthalten ist.

In einer INVITE- Meldung des SIP- Protokolls wird beispielhaft aufgezeigt, wie ein Header SIPH und Body B für die Übertragung einer Location- Information li ausgestaltet sein kann.

### Header:

INVITE sip:1002@10.26.12.102:5060;transport=udp SIP/2.0
   1)
From: Bob <sip:49897221001@10.26.12.102>;tag=5f6205144a23d
   2)
To:sip:1002@10.26.100.102
   3)
Via:SIP/2.0/UDP 10.26.12.103:5060;branch=z9hG4bKd143e9ba3
   4)
Call-ID: 9e9cf76b830011e
   5)
CSeq: 1 INVITE
   6)
Max-Forwards: 70
   7)
Content-Length:239
   8)
Supported: locationMap
   9)
Allow: INVITE,ACK,CANCEL,BYE,REFER,NOITFY,MESSAGE,UPDATE
   10)
Content-Type: application/location
   11)
Contact: Bob <sip:49897221001@10.26.100.23:5060 ;transport=udp>
   12)

### Auszug aus Body B:

<location>
   13)
<locationServer>
   http://www.server.enterprise.com/
   14)
get<locationServer>
<x-location>364.938</x-location>
   15)
<y-location>57.9834</y-location>
   16)
<z-location>578.0</z-location>
   17)
</location>
   18)

### Erläuterungen:

1) Nachrichtentyp, Zieladresse (URI), SIP- Version
2) URI (Unversal Address Information) von einem gerufenen Endgerät (d.h. die Rufnummer des gerufenen Endgerätes)
3) Displayname von gerufenem Endgerät und dessen URI
4) IP- Adresse, Portnummer und das Transportprotokoll für die Rückantwort der Nachricht
5) Zufallszeichenkette als eindeutige Nummer für eine Kommunikationsbeziehung
6) Sequenznummer (bezogen auf Nachrichtentyp)
7) maximale Anzahl Proxy Server (wird durch jeden durchlaufenen Proxy dekrementiert)
8) Länge des Bodys
9) Hinweis hli im Header SIPH, dass die Übertragung einer Location- Informaion li unterstützt wird.
10) erlaubte Meldungen m
11) Datentyp (dli) im Body (erfindungsgemäß eine Applikation für die Übertragung der Location- Information li)
12) SIP-Adresse des Endgeräts ME-T für eine direkte Kommunikation
13) Beginn der Location- Information li
14) Name des WEB- Servers WS, an den die Location- Information li vom Server S aus übermittelt werden soll
15) x- Koordinatenwert des kartesischen Koordinatensystems
16) y- Koordinatenwert des kartesischen Koordinatensystems
17) z- Koordinatenwert des kartesischen Koordinatensystems
18) Ende der Location- Information li

Der Aufbau des Headers H in den weiteren SIP- Meldungen m erfolgt im Wesentlichen gemäß dem dargestellten Beispiel. Die Location- Information li im Body B einer SIP- Meldung m kann unterschiedlich ausgestaltet sein.

In einer ersten Variante, die in dem Ausführungsbeispiel für einen Body B gezeigt ist, ist eine Adressinformation ai eines WEB- Server WS angegeben, an den die Location- Information li zu übermitteln ist. In diesem WEB- Server WS ist ein WEB-Dienst WD mit der Adressinformation aid realisiert, mit dessen Hilfe die Location- Information li unterschiedlich aufbereitet werden kann und im WEB-Format den Endgeräten ME oder Applikationen bereitgestellt wird. Des Weiteren sind die x- und y-Koordinatenwerte eines kartesischen Koordinatensystems angegeben, die beispielsweise durch eine vorhergehend beschriebene GPS- Funktion GPS bereitgestellt werden. Optional wird, sofern diese Information im Endgerät verfügbar ist, wird auch der z- Koordinatenwert eines kartesischen Koordinatensystems angegeben - z.B. Höhe über NN. Gemäß dieser Variante wird die Location- Information li zusammen mit der Adressinformation ai an den Server S übertragen. In diesem wird erkannt, dass die Location- Information li an den adressierten WEB- Server WS durch das drahtlose Netzwerk WLAN weiterzuleiten ist - in der Figur durch einen mit li bezeichneten Pfeil angedeutet.

In dem WEB- Server WS kann mit Hilfe eines implementierten WEB- Dienstes WD die Location- Information li beispielsweise für eine Anzeige im WEB- Format aufbereitet, gespeichert und für verschiedene Applikationen bereitgestellt werden. Die Aufbereitung kann beispielsweise derart erfolgen, dass die Location- Information li als eine geographische Anzeige in eine Landkarte eingefügt und anschließend im WEB- Format an ein mobiles Endgerät ME oder eine Applikation im Netzwerk WLAN - nicht dargestellt - übermittelt und dort angezeigt bzw. verarbeitet wird. Andere Aufbereitungen für beispielsweise Verwendungen in Applikationen können vorteilhaft mit anderen Diensten in dem WEB- Server WS oder anderen Servern - nicht dargestellt - oder anderen Komponenten des drahtlosen Netzwerks WLAN realisiert werden. Beispiele für eine Aufbereitung sind Darstellungswissen wie beispielsweise 3D Darstellung von Gebäuden/Landschaften, 2D Darstellung von Kartenmaterial/Übersichtsplan, oder auch einfach eine tabellarisch Aufbereitung.

Eine weitere, nicht dargestellte Variante besteht darin, dass die Location- Information li nur als x-, y- und z-Koordinatenwerte des kartesischen Koordinatensystems in den Body B eingefügt, an den Server S übertragen und dort gespeichert werden. Die gespeicherte Location- Information li kann anschließend unterschiedlichen Endgeräten ME und Applikationen zur Verfügung gestellt werden oder von diesen abgerufen werden.

Eine weitere Variante besteht darin, dass zusätzlich zur Location- Information li eine Download- Adressinformation übertragen wird, mit der die bearbeitete bzw. aufbereitete Location- Information li' in die mobilen Endgeräte oder Applikationen geladen werden kann. Die Download- Adresse dai kann beispielsweise die Netzadresse des WEB- Servers WS sein, von dem die Location- Information li' nach einer Bearbeitung bzw. Aufbereitung in die betroffenen mobilen Endgeräte ME bzw. Applikationen geladen werden kann.

Die Location- Information li kann im Body B auch auf unterschiedlicher Weise angegeben werden. Zum einen kann diese in x- und y- und optional in z- Koordinatenwerten im kartesischen Koordinatensystem und zum anderen auch in einer postalischen Information oder durch eine andere geophysikalische Information oder Angabe angegeben werden. Die Art der Angabe hängt hierbei davon, welche Art von Location- Information li die Funktion zur Ermittlung des geographischen Aufenthalts P im mobilen Endgerät ME-T bereitstellen kann. Beispielsweise können durch eine GPS- Funktion GPS mit erweitertem Umfang auch postalische Informationen wie Städtenamen, Straßennamen oder Namen von Gebäuden oder Firmennamen bereitgestellt werden. Eine andere geophysikalische Angabe stellt beispielsweise eine Angabe eines Aufenthaltbereichs dar, bei dem aus einem in mehrere Aufenthaltsbereiche spezifizierter größerer geographischer Bereich durch eine alphanumerische Angabe ein geographischer Bereich ausgewählt wird.

## Patentansprüche

1. Verfahren zum Informieren eines auf dem Internetprotokoll (IP) basierenden Netzwerks (WLAN) über den geographischen Aufenthalt eines Endgeräts (ME-T),
bei dem eine im Endgerät (ME-T) verfügbare, den geographischen Aufenthalt des Endgeräts (ME-T) anzeigende Location-Information (li) in Meldungen (m) eines SIP- Protokolls (SIP) eingebettet wird,
- die während des Aufbaus einer Session oder
- während einer Session zwischen dem Endgerät (ME-T) und dem Netzwerk (WLAN) ausgetauscht werden oder
- die während der Registrierung eines Endgeräts (ME_T) im Netzwerk (WLAN) oder
- bei einer Anforderung eines Dienstes oder Funktion ausgetauscht werden;
**dadurch gekennzeichnet,**
**dass** für die WEB- orientierte Darstellung der Location- Information (li) im Netzwerk (WLAN) ein Webdienst (WD) vorgesehen ist, mit dessen Hilfe die Location- Information (li) graphisch und/oder auditiv und/oder textual aufbereitet wird, wodurch die Location- Information (li) an unterschiedliche Ausgabeformate bzw. Ausgabetypen und Darstellungen aufweisende Ausgabegeräte der jeweiligen Endgeräte (ME-T) angepasst wird, und
**dass** zusätzlich zur Location- Information (li) eine Adressinformation eines Webdienstes (WD) oder eine Download-Adressinformation (dai) zum Downloaden der aufbereiteten Location-Information (li') in die Meldungen (m) eingefügt wird.

2. Verfahren nach Anspruch 1, **dadurch gekennzeichnet,**
**dass** die Location- Information (li) durch
- eine postalische Information ,
- eine geophysikalsiche Information, oder
- einen Emergency Location Identification Number oder
- eine weitere Darstellung der Location- Information repräsentiert ist.

3. Verfahren nach einem der vorhergehenden Ansprüche, **dadurch gekennzeichnet,**
**dass** in den Header (SIPH) einer SIP- Meldung (m) ein Hinweis (hli) eingefügt ist, dass das SIP- Protokoll (SIP) die Übertragung einer Location- Information (li) unterstützt sowie ein Hinweis auf den Typ der Location- Information (li) im Nutzteil (B) der SIP- Meldung (m) angegeben ist, und dass in den Nutzteil (B) die Location- Information (li) und optional die Adressinformation (aid) eines WEB- Dienstes (WD) eingefügt ist.

4. Verfahren nach Anspruch 3, **dadurch gekennzeichnet,**
**dass** in den Nutzteil (B) eine Download- Adressinformation (dai) angegeben ist, mit der eine aufbereitete Location- Information (li') von einer die Aufbereitung durchführende Netzwerkkomponente (WS) an eine Applikation oder an ein Endgerät (ME) geladen werden kann.

5. Verfahren nach einem der vorhergehenden Ansprüche, **dadurch gekennzeichnet,**
**dass** das Netzwerk (LAN) durch ein drahtgebundenes paketorientiertes Netzwerk oder durch ein drahtloses paketorientiertes Netzwerk realisiert ist und dass das Endgerät (ME) optional mit einer Telefonfunktion ausgestattet ist.

6. Mobiles Endgerät, ausgestaltet zum Durchführen des Verfahrens nach einem der Ansprüche 1 bis 5.

## Claims

1. Method for informing a network (WLAN) based on the internet protocol (IP) about the geographical location of a terminal device (ME-T), in which location information (li) available in the terminal device (ME-T) and displaying the geographical location of the terminal device (ME-T) is embedded in messages (m) of an SIP protocol (SIP),
- which are exchanged during the establishment of a session or during a session between the terminal device (ME-T) and the network (WLAN) or
- which are exchanged during the registration of a terminal device (MET) in the network (WLAN) or
- in the event of a request for a service or function; **characterised in that** for the web-oriented representation of the location information (li) a web service (WD) is provided in the network (WLAN), wherein with the help of said web service the location information (li) is processed graphically and / or auditorily and / or textually, wherein the location information (li) is adapted to output equipment of the particular terminal device (ME-T) having different output formats or output types and representations, and that in addition to the location information (li) address information of a web service (WD) or download address information (dai) is inserted into the messages to download the processed location information (li').

2. Method according to claim 1, **characterised in that** the location (li) is represented by
- postal information,
- geophysical information, or
- an emergency location identification number.

3. Method according to any one of the preceding claims, **characterised in that** in the header (SIPH) of an SIP message (m) a reference (hli) is inserted that the SIP protocol (SIP) supports the transfer of location information (li) and a reference to the type of location information (li) in the useful part (B) of the SIP message (m) is given, and that in the useful part (B) the location information (ii) and optionally the address information (aid) of a web service (WD) is inserted.

4. Method according to claim 3, **characterised in that** in the useful part (B) download address information (dai) is provided, with which processed location information (li') can be loaded form a network component (WS) carrying out the processing to an application or to a terminal device (ME).

5. Method according to any one of the preceding claims, **characterised in that** the network (LAN) is made by a wired packet-oriented network or by a wireless packet-oriented network and that the terminal device (ME) is equipped optionally with a telephone function.

6. Mobile terminal device designed to carry out the method according to any one of claims 1 to 5.

## Revendications

1. Procédé servant à informer un réseau (WLAN) se basant sur un protocole Internet (IP) d'un emplacement géographique d'un terminal (ME-T),
dans le cadre duquel une information de localisation (li) disponible dans le terminal (ME-T), indiquant l'emplacement géographique du terminal (ME-T) est intégrée dans des messages (m) d'un protocole SIP (SIP),
- qui sont échangés au cours de l'ouverture d'une session ou
- au cours d'une session entre le terminal (ME-T) et le réseau (WLAN) ou
- qui sont échangés au cours de l'enregistrement d'un terminal (ME-T) dans le réseau (WLAN) ou
- lors d'une demande d'un service ou d'une fonction, **caractérisé en ce**
**qu'**est prévu, pour l'affichage orienté Web de l'information de localisation (li) dans le réseau (WLAN),
un service Web (WD), à l'aide duquel l'information de localisation (li) est préparée sous une forme graphique et/ou sonore et/ou textuelle,
ce qui permet d'adapter l'information de localisation (li) à différents formats ou types d'édition et à des appareils d'édition, présentant des affichages, des terminaux respectifs (ME-T), et
en ce que sont insérées dans les messages (m), en plus de l'information de localisation (li), une information d'adresse d'un service Web (WD) ou une information d'adresse de téléchargement (dai) servant à télécharger l'information de localisation préparée (li').

2. Procédé selon la revendication 1, **caractérisé en ce que** l'information de localisation (li) est représentée par
- une information postale,
- une information géophysique, ou
- un numéro d'identification de localisation d'urgence ou
- un autre affichage de l'information de localisation.

3. Procédé selon l'une quelconque des revendications précédentes,
**caractérisé en ce**
**que** sont insérées, dans l'en-tête (SIPH) d'un message SIP (m), une remarque (hli) soulignant que le protocole SIP (SIP) supporte la transmission d'une information de localisation (li),ainsi qu'une remarque soulignant le type de l'information de localisation (li) dans la partie utile (B) du message SIP (m), et en ce que sont insérées dans la partie utile (B) l'information de localisation (li), et, en option, l'information d'adresse (aid) d'un service Web (WD).

4. Procédé selon la revendication 3, **caractérisé en ce qu'**est indiquée, dans la partie utile (B), une information d'adresse de téléchargement (dai), à l'aide de laquelle une information de localisation préparée (li') peut être chargée par un composant de réseau (WS) exécutant la préparation, sur une application ou sur un terminal (ME).

5. Procédé selon l'une quelconque des revendications précédentes,
**caractérisé en ce**
**que** le réseau (LAN) est réalisé par un réseau filaire orienté paquets ou par un réseau sans fil orienté paquets, et en ce que le terminal (ME) est en option équipé d'une fonction de téléphone.

6. Terminal mobile, équipé aux fins de l'exécution du procédé selon l'une quelconque des revendications 1 à 5.
